# EUROPÄISCHE PATENTANMELDUNG

(11) **EP 3 819 274 A1**
(43) Veröffentlichungstag der Anmeldung: **12.05.2021**
(21) Anmeldenummer: 19207611.5
(22) Anmeldetag: 07.11.2019
(51) Int. Cl.: C04B 28/04, C04B 40/00, C04B 111/00

(54) **ZUSATZSTOFF FÜR BETON UND VERFAHREN ZUR HERSTELLUNG DIESES BETONS**

(71) Anmelder: Martellus GmbH, 8125 Zollikerberg (CH)
(72) Erfinder: Klauck, Wolfgang Josef, 40670 Meerbusch (DE)
(74) Vertreter: Dosterschill, Peter

(57) **Zusammenfassung**

Die Erfindung betrifft einen Zusatzstoff für Beton, der
(a) ein Butadien-Styrol-Copolymer;
(b) ein Styrol-Acrylester-Copolymer; und
(c) Wasser enthält.

Die Erfindung betrifft außerdem ein Verfahren zur Herstellung eines Magerbetons, enthaltend einen Schritt der Mischung eines Zements mit einem Zusatzstoff nach einem der Ansprüche 1 bis 10 und mit einer Gesteinskörnung.

## Beschreibung

### Technisches Gebiet

Die Erfindung betrifft einen Zusatzstoff für Beton, der insbesondere für Schichten im Wege- und Straßenbau geeignet ist, und ein Verfahren zur Herstellung dieses Betons.

### Stand der Technik

Mit den hydraulischen Bindemitteln Zement oder Tragschichtbinder verfestigte bzw. stabilisierte Schichten haben im Verkehrswegebau große Bedeutung. Diese Schichten werden sowohl zur Herstellung des Unterbaus als auch zur Herstellung des Oberbaus von Fahrbahnkonstruktionen in hochrangigen Straßennetzen sowie im Wegebau eingesetzt. Die strukturelle Festigkeit und die Ermüdungsfestigkeit der mit hydraulischen Bindemitteln stabilisierten Schichten sind insbesondere für die Lebensdauer der Oberbaukonstruktionen der Verkehrsflächen von großer Bedeutung.

Zusatzstoffe (Additive) zur Untergrundbefestigung sind bekannt. Insbesondere ist auch der Einsatz von Polymerdispersionen zur Veredlung von zementösen Bindemitteln bekannt. Der Zusatz von bekannten Polymerdispersionen hat aber die Nachteile, dass sie hoch zu dosieren sind, um die Porosität und die Wasseraufnahme erheblich abzusenken und um die Haftzugfestigkeit auf einem glatten Untergrund zu steigern. Als Additive zur Untergrundbefestigung auf Basis von hydraulisch gebundenen Tragschichten (HGTs) werden bislang meistens Dispersionssysteme mit Aktivsubstanzgehalten unter 10 Gew.-% verwendet. Diese Dispersionssysteme sind oft dickflüssig, so dass die Auslaufzeiten- bzw. Wartezeiten von diese Dispersionssysteme enthaltenden Containern auf einer Baustelle lang sein können. Überdies sind u.a. wegen des Transportes von viel Wasser die Ökobilanzen dieser Produkte deutlich verbesserungsbedürftig. Schließlich ist die Wasserfestigkeit dieser Dispersionssysteme aufgrund ihres Gehaltes an Chlorid-haltigen Salzadditiven sowie hydrophilen Polymeren limitiert.

Vorbekannte Produkte sind flüssige Polymer-Emulsionen, die unter anderem SiO₂ enthalten.

Diese Produkte sind in der Broschüre "WALK THIS WAY" der NanoTera AG München/Deutschland beschrieben.

Die Veröffentlichung EP 2 430 093 B1 offenbart wässrige Polymerdispersionen enthaltend a) mindestens ein dispergiertes Copolymer CP, welches aufgebaut ist aus mindestens zwei Monomeren, welche ausgewählt sind aus der Gruppe bestehend aus Ethylen, Propylen, Butylen, Isopren, Butadien, Styrol, Acrylonitril, Acrylsäure, Methacrylsäure, Acrylsäurealkylester, Methacrylsäurealkylester, Vinylester und Vinylchlorid; und weiterhin b) mindestens ein Kammpolymer KP mit über Ester- oder Ethergruppen an die Hauptkette angebundenen Seitenketten; sowie Wasser.

Die WO 2011/086095 A1 beschreibt die Verwendung von Betonzuschlägen, die eine Beschichtung mit organischen Polymeren aufweisen, zur Verbesserung der Stabilität von Beton gegen die Alkali-Kieselsäure-Reaktion. Das Polymer ist beispielsweise ein StyrolButadien-Copolymer oder Styrol-Acrylat-Copolymer, die gegebenenfalls carboxyliert sind.

Die EP 2 256 098 A1 beschreibt ein Mittel zur Bodenverfestigung, umfassend einen Celluloseether, ein Alkalihydroxyd, Calciumchlorid, einen synthetischen Latex, und amorphes pyrogenes Siliziumdioxid mit einer durchschnittlichen Partikelgröße im Bereich von 1 - 100 nm, wobei als synthetischer Latex insbesondere ein Polypropylen/Styrol-Butadien Blockcopolymer verwendet wird.

Aufgabe der vorliegenden Erfindung war vor diesem Hintergrund die Bereitstellung eines Zusatzstoffs für Beton, der eine Verwendung in konzentrierter, aber dennoch vergleichsweise dünnflüssiger Form ermöglicht. Vorzugsweise soll dieser Zusatzstoff auch zur Herstellung von mit hydraulischen Bindemitteln verfestigten oder stabilisierten Schichten zur Verwendung im Wegebau geeignet sein, wo er vorzugsweise eine Erhöhung der Ermüdungsfestigkeit der mit den hydraulischen Bindemitteln gebundenen Schichten bewirkt. Aufgabe der Erfindung war außerdem die Bereitstellung eines Verfahrens zur Herstellung dieses Betons.

Die Lösung dieser Aufgabe wird nach dieser Erfindung erreicht durch einen Zusatzstoff für einen Beton sowie ein Verfahren zur Herstellung dieses Betons mit den Merkmalen der unabhängigen Patentansprüche. Bevorzugte Ausführungsformen des erfindungsgemäßen Zusatzstoffes sind in entsprechenden abhängigen Patentansprüchen aufgeführt. Bevorzugte Ausführungsformen der erfindungsgemäßen Zusatzstoffe entsprechen bevorzugten Ausführungsformen des erfindungsgemäßen Verfahrens und umgekehrt, selbst wenn dies hierin nicht explizit festgestellt wird.

Gegenstand der Erfindung ist somit ein Zusatzstoff für Beton, der
(a) ein Butadien-Styrol-Copolymer;
(b) ein Styrol-Acrylester-Copolymer; und
(c) Wasser enthält.

Der Festkörpergehalt im Zusatzstoff liegt vorzugsweise im Bereich von 40 bis 60 Gew.-%, mehr bevorzugt im Bereich von 45 bis 55 Gew.-%, bezogen auf das Gesamtgewicht des Zusatzstoffs.

Der Beton ist erfindungsmäßig nicht eingeschränkt. Aber in einer bevorzugten Ausführungsform des Zusatzstoffes ist der Beton ein Magerbeton mit einem Zementanteil von weniger als 12 Gew.-%, bezogen auf den Beton. Ein Magerbeton enthält neben Zement im Allgemeinen alle Bestandteile, die auch in Betonen mit höheren Zementanteilen üblich sind.

Der erfindungsgemäß eingesetzte Zement ist im Allgemeinen Portlandzement.

Vorzugsweise ist der erfindungsgemäße Zusatzstoff ein Zusatzstoff für Beton zur Bodenverfestigung.

Die Copolymere (a) und (b) werden im Allgemeinen in Form ihrer wässrigen Emulsionen eingesetzt. Diese Copolymere sind in kommerziell erhältlichen Emulsionen enthalten, die beispielsweise unter den Bezeichnungen KUMHO KSL 362 Latex der JUMHO PETROCHEMICAL oder Acronal® der BASF SE vertrieben werden.

Das Butadien-Styrol-Copolymer (a) weist erfindungsgemäß bevorzugt eine Glasübergangstemperatur Tg1 im Bereich von -60°C bis +30°C auf, vorzugsweise im Bereich von -40°C bis +10°C.

Das Butadien-Styrol-Copolymer (a) kann weitere Comonomere enthalten. Beispiele für geeignete Comonomere sind Ethylen, Propylen, Butylen, Isopren, Acrylonitril, Acrylsäure, Methacrylsäure, Acrylsäurealkylester, Methacrylsäurealkylester, Vinylester, Vinylchlorid und Vinyl- oder Methacrylsilane. Sofern Comonomere enthalten sind, liegt ihr Gehalt im Allgemeinen unter 6 Gew.-%, bezogen auf das Butadien-Styrol-Copolymer (a).

Das Styrol-Acrylester-Copolymer (b) weist erfindungsgemäß bevorzugt eine Glasübergangstemperatur Tg2 im Bereich von -60°C bis +40°C auf, vorzugsweise im Bereich von -40°C bis +10°C.

Die vorgenannten Werte für Tg1 und Tg2 beziehen sich auf eine Messung mit Differential Scanning Calorimetry (DSC) gemäß DIN EN ISO 11357-1.

Der Acrylester im Styrol-Acrylester-Copolymer (b) ist nicht eingeschränkt. Nicht einschränkende Beispiele für den Acrylester im Styrol-Acrylester-Copolymer (b) sind Ethylacrylat, Propylacrylat, Butylacrylat, Ethylhexylacrylat und Vinyl- oder Methacrylsilane. Bevorzugt wird als Acrylester ein Butylacrylat eingesetzt, so dass das Styrol-Acrylester-Copolymer (b) vorzugsweise ein Styrol-Butylacrylat-Copolymer ist.

Neben den Copolymeren (a) und (b) kann der erfindungsgemäße Zusatzstoff noch weitere Polymere und/oder Copolymere (h) enthalten. Beispiele für weitere Polymere und/oder Copolymere sind Reinacrylatdispersionen, Polyurethandispersionen, Naturkautschuklatex oder Stärke- / Zellulosederivate. Sofern diese zusätzlich im Zusatzstoff enthalten sind, beschränkt sich ihr Gehalt im Allgemeinen auf bis zu 5 Gew.-%, bezogen auf die Gesamtmasse an Polymeren und Copolymeren im Zusatzstoff. Dabei kann zusätzlich als Komponente (h) im Zusatzstoff vorteilhaft ein Acrylnitril-Butadien-Copolymer enthalten sein.

In einer bevorzugten Ausführungsform enthält der Zusatzstoff 5 bis 95 Gew.-%, vorzugsweise 20 bis 80 Gew.-%, und noch mehr bevorzugt 40 bis 80 Gew.-% Butadien-Styrol-Copolymer (a); und 5 bis 95 Gew.-%, vorzugsweise 20 bis 80 Gew.-%, und noch mehr bevorzugt 40 bis 80 Gew.-% Styrol-Acrylester-Copolymer (b), jeweils bezogen auf die Summe von (a) und (b).

Das Styrol-Acrylester-Copolymer (b) ist vorzugsweise ein Styrol-Butylacrylat-Copolymer.

Der Zusatzstoff hat vorzugsweise einen Gehalt an Wasser (c) im Bereich von 30 bis 70 Gew.-%, mehr bevorzugt im Bereich von 40 bis 60 Gew.-%, jeweils bezogen auf das Gesamtgewicht des Zusatzstoffs. Dabei liegt der pH-Wert im Allgemeinen im Bereich von 9 bis 12,5, vorzugsweise im Bereich von 9,5 bis 12, und mehr bevorzugt im Bereich von 10 bis 11,5.

Erfindungsgemäß ist ein Zusatzstoff besonders bevorzugt, der zusätzlich als Komponente (d) ein Alkalisilikat (Natrium, Kalium, Lithium) enthält, vorzugsweise ein Natriumsilikat mit einem Gewichtsverhältnis SiO₂ zu Na₂O im Bereich von 1,5 bis 5. Bevorzugt liegt der Anteil von Na₂O in der flüssigen Komponente (d) im Bereich von 5 bis 15 Gew.-%, bezogen auf das Gesamtgewicht der Komponente (d). Vorzugsweise ist das Natriumsilikat (d) im Zusatzstoff in einer Menge von 0,3 bis 5 Gew.-%, bezogen auf das Gesamtgewicht des Zusatzstoffes, enthalten. Geeignet ist beispielsweise Betol® der Fa. Woellner, das ein rein anorganisches Bindemittel und Additiv auf Natriumsilikatbasis ist. Die Verwendung von Natriumsilikat in solchen Mengen im erfindungsgemäßen Zusatzstoff ist sehr ungewöhnlich, da dieses als zum sog. Betonkrebs beitragend angesehen wird. Dieser unerwünschte Effekt wird bei der vorliegenden Erfindung allerdings nicht beobachtet.

Die Viskosität des erfindungsgemäßen Zusatzstoffes liegt vorzugsweise im Bereich von 100 bis 3.000 mpas. Die Messung der Viskosität erfolgt durch ein Brookfield RV-Rheometer (Spindel 4, 50 Umdrehungen / min bei 20°C).

Schließlich ist erfindungsgemäß ein Zusatzstoff bevorzugt, der zusätzlich als Komponente (e) ein pyrogenes oder kolloidales Siliziumdioxid enthält, vorzugsweise ein pyrogenes Siliziumdioxid. Das Siliziumdioxid (e) ist dann vorzugsweise in einer Menge von 0,1 bis 2 Gew.-%, bezogen auf das Gesamtgewicht des Zusatzstoffes, enthalten. Ein geeignetes Siliziumdioxid ist beispielsweise Aerosil 200 der Fa. Evonik.

Überdies enthält der Zusatzstoff vorzugsweise als Komponente (g) einen Entschäumer. Der Entschäumer ist im Allgemeinen in einer Menge von 0,01 bis 0,2%, bezogen auf den Zusatzstoff, enthalten. Geeignete Entschäumer, insbesondere nichtionogene Entschäumer, enthalten beispielsweise modifizierte Fettstoffe, Kieselsäure, oxalkylierte Verbindungen und Emulgatoren. Geeignet ist beispielsweise AGITAN® 351 der Firma MÜNZING CHEMIE GmbH. Allerdings können auch kationische oder anionische Entschäumer verwendet werden. Deren Anwendung wird im Allgemeinen vom pH-Wert des Zusatzstoffes abhängen.

Der Zusatzstoff kann überdies hydrophile Polymere wie Cellulosederivate oder Stärkederivate (Methylcellulose, Methylhydroxypropylcellulose, Methylhydroxyethylcellulose oder Hydroxypropylstärke) enthalten. Allerdings ist es erfindungsgemäß sogar von Vorteil, dass auf die hydrophilen Polymere verzichtet werden kann.

Der Zusatzstoff wird insbesondere bei der Herstellung von mit hydraulischen Bindemitteln gebundenen Gesteinskörnungen mit Wasser, sogenanntem Zugabewasser, in das Gemisch dosiert.

Die Erfindung betrifft außerdem ein Verfahren zur Herstellung eines Magerbetons, enthaltend einen Schritt der Mischung eines Zements mit einem der vorgenannten Zusatzstoffe und mit einer Gesteinskörnung.

Die Gesteinskörnung für Beton und deren Eigenschaften werden nach der EN 12620 definiert und gemessen. Im Standardnachschlagewerk "Zement Taschenbuch 2000, ISBN 3-7640-0399-5" werden diese ausführlich erläutert.

In einer bevorzugten Ausführungsform ist das erfindungsgemäße Verfahren ein Verfahren zur Herstellung eines Straßen- oder Wegaufbaus, enthaltend einen Schritt der Herstellung einer hydraulisch gebundenen Schicht, in dem ein Bodenmaterial mit dem Zement und dem oben beschriebenen Zusatzstoff vermischt wird und eine daraus erhaltene Untergrundschicht kompaktiert wird.

Das Bodenmaterial besteht aus vorhandenen Bodenbestandteilen und/oder Zuschlägen, die für eine hydraulisch gebundene Trägerschicht nötig sind.

Ein Verfahren zur Herstellung eines Straßen- oder Wegaufbaus ist bevorzugt, bei dem die hydraulisch gebundene Schicht Zement in einer Menge von 0,3 bis 10 Gew.-%, vorzugsweise in einer Menge von 2 bis 5 Gew.-%, bezogen auf das Gewicht der Schicht enthält.

Zudem ist erfindungsgemäß ein Verfahren bevorzugt, bei dem die hydraulisch gebundene Schicht den Zusatzstoff in einer Menge von 0,05 bis 0,5 Gew.-%, bezogen auf das Gewicht der Schicht, enthält.

Erfindungsgemäß ist zudem ein Verfahren bevorzugt, bei dem auf der hydraulisch gebundenen Schicht eine Deckschicht aufgebracht wird, vorzugsweise eine Bitumen oder Beton enthaltende Deckschicht. Im Standardnachschlagewerk "Straßenbau und Straßenerhaltung, ISBN 3 503 06094 4" ist diese Arbeitsweise ausführlich dokumentiert.

Ein Straßenkörper im Straßen- und Wegebau enthält im Allgemeinen einen unterteilten Oberbau, der eine Deckschicht, nämlich die Fahrbahndecke, und ggf. eine sog. Binderschicht trägt. Der unterteilte Oberbau besteht im Allgemeinen aus Tragschichten, die wiederum in ungebundene Tragschichten (Frostschutzschicht, Kies- und Schotterschicht, Bodenverbesserungsschicht) und gebundene Tragschichten unterteilt sind.

Bei der Verwendung des erfindungsgemäßen Zusatzstoffes im erfindungsgemäßen Verfahren können beispielsweise in einer Mischanlage ein Bodenmaterial, Zuschlagstoffe, Recycling-Material, Zement und der erfindungsgemäße Zusatzstoff in einer stationären oder mobilen Mischanlage vorab mit optimiertem Wassergehalt gemischt werden. Diese Mischung kann anschließend auf eine Baustelle gebracht werden, wo dann diese beispielsweise als Tragschicht für eine Bodenschicht ausgebracht werden kann. Im Allgemeinen wird dann mit einem Grader ein Planum hergestellt und anschließend eine Verdichtung der homogenisierten und verbesserten Bodenschicht mittels vibrierender Walzen durchgeführt. In weiteren Arbeitsgängen können dann Deckschichten aus Split, Asphalt und/oder Beton aufgebracht werden. Beispielsweise kann eine Deckschicht aus Split und Bitumenemulsion hergestellt werden, wie im Nachschlagewerk Asphalt im Straßenbau, ISBN 978-3-7812-1782-9 ausführlich beschrieben wird.

Allerdings kann auch vor Ort an einer Baustelle die Verarbeitung des erfindungsgemäßen Zusatzstoffes erfolgen. Dabei kann beispielsweise eine festgelegte Zementmenge auf den anstehenden Boden ausgebracht werden und der Boden bis zu beispielsweise 50 cm mit einer Bodenfräse gefräst werden. Dabei wird der Zement mit optimierter Wassermenge eingearbeitet.

Die Erfindung hat zahlreiche Vorteile. Es können Kosten- und Qualitätsvorteile erzielt werden, wobei die Bauzeit sowie der CO₂-Ausstoß reduziert werden können. Letzteres insbesondere auch durch eine kürzere Einsatzzeit von Baumaschinen. Es ist möglich, eine verbesserte Biegefestigkeit unabhängig von der Menge des im Allgemeinen verwendeten Portlandzements zu erreichen. Schichtdicken der Beton- oder Asphaltdecken können eventuell reduziert werden. Die Wasserempfindlichkeit und somit die Frostempfindlichkeit verringern sich. Die Lebensdauern der Tragschichten bzw. der damit erstellten Straßen- oder Wegbeläge verlängern sich und ebenso die Wartungsperioden von mit recycelten Materialien gebauten Straßen.

Der erfindungsgemäße Zusatzstoff katalysiert nicht nur die Zementreaktion sondern verhindert auch Auswaschungen von Schadstoffen wie z.B. Steinkohleteer. Er erhöht die Biegefestigkeit und somit die Elastizität der diesen Zusatzstoff enthaltenden Schichten. Der Straßenaufbau und die Schichtdicke können ohne Qualitätseinbußen vereinfacht werden. Es werden Zementstabilisierungen mit allen Arten vorhandener Böden sowie mit recycelten Zuschlagstoffen, Bitumen, organischen Komponenten und Schadstoffen ermöglicht. Es können daher hohe Einsparungen bei Entsorgungs-, Transport- und Materialkosten realisiert werden. Die zusätzliche Verbesserung der Elastizität und der Frostbeständigkeit führt zu deutlich verminderter Rissbildung in der stabilisierten Schicht über die gesamte Lebensdauer. Kurvenreiche Straßen, insbesondere kurvenreiche Bergstraßen, sind nämlich extremen Scherkräften ausgesetzt, so dass es im Allgemeinen zu einem schnellen Abrieb kommt. Zudem können die Witterungsverhältnisse und deren Änderungen die Untergründe stark belasten, insbesondere durch starke Regenfälle und Stürme. Es kann schließlich zu erhöhter Rissbildung in der Tragschicht kommen, so dass die Frostbeständigkeit und Elastizität der Tragschicht wichtig sind. Dadurch vermindert sich die Rissbildung und die Tragschicht nimmt zusätzlich Zugkräfte auf. Dies führt zu deutlich längerer Haltbarkeit und besserer Qualität. Darüber hinaus kann ein recycelter Straßenbelag sicher in die Tragschicht einbezogen werden.

Es wird zudem ein Zusatzstoff bereitgestellt, der die Verwendung mit einem hohen Aktivstoffgehalt bei vergleichsweiser Dünnflüssigkeit ermöglichen kann. Beim Einsatz des Zusatzstoffes können hohe Biegefestigkeitswerte der Bodenschicht erreicht werden. Somit kann erstmals ein flüssiges Ultrakonzentrat zur Bodenstabilisierung bereitgestellt werden. Im Vergleich zu bekannten System muss nur noch ca. 1/6 der bisher üblichen Menge eingesetzt werden. Trotz des hohen Festkörpergehaltes, der realisiert werden kann, wird ein absolut umweltverträgliches Produkt erhalten, das dünnflüssig ist und sich somit sehr rasch mit dem zulaufenden Wasser auf einer Baustelle vermischen kann. Überdies kann auf Salz-Zusätze und hydrophile Polymerbestandteile verzichtet werden. Belastungssimulationen haben überdies eine verlängerte Lebensdauer der Straße ergeben.

Bei der Straßenherstellung können eine besonders elastische hydraulisch gebundene Tragschicht (HGT) und eine Asphaltdeckschicht kombiniert werden. Durch den erfindungsgemäßen Zusatzstoff kann dabei die Elastizität der HGT erhöht und dadurch die Rissbildung erheblich verringert werden. Damit ist auch eine Reduzierung der Stärke einer Asphaltdeckschicht möglich, z.B. von 14 cm auf 8 cm. Die Druckfestigkeit erhöht sich auch ohne Einsatz von Entspannungswalzen. Es wird eine kürzere Bauzeit eine dünnere Asphaltdecke ermöglicht, wobei erreicht werden kann, dass weder Rissbildungen noch Setzungen auftreten. Es ist in einigen Fällen kein Transport und Einsatz von Primärrohstoffen (Kies, Splitt) für die HGT erforderlich, so dass durch den verringerten Einsatz von Baufahrzeugen auch der CO₂-Ausstoß verringert werden kann. Es kann eine Stabilisierung von Wegen, z.B. von Waldwegen im alpinen Raum bei hoher Frost-Tau-Belastung erreicht werden. Eine Stabilisierung wird dabei schon mit Zement und Zusatzstoff, ohne eine Tragschicht, erreicht.

### Beispiele

Das folgende, nicht einschränkende Beispiel dient zur Illustration der vorliegenden Erfindung. In dem Beispiel wurde ein erfindungsgemäßer Zusatzstoff mit der folgenden Zusammensetzung verwendet, der im Folgenden auch als Zusatzstoff Z bezeichnet wird:

| | |
|---|---|
| 70,00 | Gew.-% Butadien-Styrol-Copolymer-Dispersion |
| 28,75 | Gew.-% Styrol-Butylacrylat-Copolymer-Dispersion |
| 1,00 | Gew.-% Natriumsilikat |
| 0,25 | Gew.-% Kieselsäure |

jeweils bezogen auf das Gewicht des Zusatzstoffes.

Hierzu wurden die einzelnen Komponenten gemischt, wobei zur Herstellung des Zusatzstoffes das Butadien-Styrol-Copolymer (Tg1 = +1°C, pH-Wert = 10,0, Festkörpergehalt = 48 Gew.-%) wie auch das Styrol-Butylacrylat-Copolymer (Tg2 = -8°C, pH-Wert = 8,0, Festkörpergehalt = 59 Gew.-%) in Form ihrer wässrigen Emulsionen für die Mischung verwendet wurden.

Beim verwendeten Natriumsilikat handelte es sich um eine wässrige Lösung mit 36 Gew.-% Festkörpergehalt, einem pH-Wert von 11,4 und einem SiO₂/Na₂O-Molverhältnis von 3,3.

Als Kieselsäure wurde eine pyrogen hergestellte Kieselsäure mit einer spezifischen BET-Oberfläche von 200 m²/g eingesetzt.

Unter Verwendung von Zusatzstoff Z wurden verschiedene Betone hergestellt (M3 und M4) und deren Eigenschaften mit denen von Magerbetonen verglichen, die den Zusatzstoff Z nicht enthielten (M1 und M2).

Hierfür wurde zunächst eine Gesteinskörnung ausgewählt. Als Gesteinskörnung wurde ein korngestuftes Gemisch der Korngröße 0/16 mm (Rundkörnung) zur Herstellung der mit Zement gebundenen Gemische verwendet. Es wurde bewusst ein Korngemisch mit Größtkorn von 16 mm angewandt, um möglichst homogene Gemische für die Prüfungen herzustellen. Am Korngemisch wurde die Korngrößenverteilung mittels der Nasssieb-Analyse gemäß den Vorgaben der EN 933-1 ermittelt.

Zur Bestimmung des optimalen Wassergehaltes der mit Zement vermischten Gesteinskörnung wurde die Proctordichte gemäß den Vorgaben der EN 13286-2 ermittelt, wobei in die Gesteinskörnung 4 Gew.-% Zement CEM II gemischt wurden.

### Herstellung der mit Zement gebundenen Betone M1 bis M4

Es wurden vier mit Zement CEM II /B-M (SL) 32,5 R gebundene Gemische als Betone M1 bis M4 hergestellt, welche die in den Tabellen 1 und 2 angeführten Zusammensetzungen aufwiesen:

**Tabelle 1 - Mischungen ohne Zusatzstoff Z**

| Bestandteile | Mischung Nr. 1 (M1) (Gew.-%) | Mischung Nr. 2 (M2) (Gew.-%) |
|---|---|---|
| Zement CEM II | 4,0 | 6,0 |
| Wasser | 5,1 | 5,4 |
| Gesteinskörnung | 90,9 | 88,6 |

**Tabelle 2 - Mischungen mit Zusatzstoff Z**

| Bestandteile | Mischung Nr. 3 (M3) | Mischung Nr. 4 (M4) |
|---|---|---|
| Zement CEM II | 4,0 | 4,0 |
| Wasser | 5,1 | 5,1 |
| Gesteinskörnung | 90,9 | 90,9 |
| Zusatzstoff Z | 3,0* | 5,0* |

| | | |
|---|---|---|
| *) Zusatz an Zusatzstoff Z jeweils bezogen auf das Zementgewicht. | | |

Die Mischungen wurden in einem Zwangsmischer hergestellt, wobei die Mischzeit 120 s betrug. Der Zusatzstoff Z wurde mit dem Zugabewasser dosiert.

Die erzeugten Betone M1 bis M4 wurden vergleichenden Prüfungen an Probekörpern unterzogen. Hierzu war ein Prüfprogramm festgelegt worden, das der Vorgabe der österreichischen Richtlinie und Vorschrift für den Straßenbau, RVS 08.17.01 "Mit Bindemitteln stabilisierte Tragschichten", für die Ausführung der Eignungsprüfung an den mit hydraulischen Bindemitteln stabilisierten Tragschichten entsprach. Das Prüfprogramm wurde um die "Bestimmung des Sehwindverhaltens des mit Zement gebundenen Mischgutes" sowie die "Bestimmung der Beständigkeit gegen Ermüdung der mit Zement stabilisierten Schichten" erweitert.

### Herstellung der Probekörper - Prüfungen im Rahmen einer Eignungsprüfung gemäß der RVS 08.17.01

### (1) Herstellung der Probekörper

Aus den mit Zement versetzten Gesteinskörnungen wurden bei optimalem Wassergehalt Probekörper (Abmessungen d: 150 mm, h: 125 mm) gemäß dem Verfahren der Proctordichte (1-Punkt-Methode) gemäß der EN 13286-2 hergestellt. Die Probekörper wurden 24 Stunden nach der Herstellung aus den Proctor-Schalungen entnommen und bis zur Prüfung beim Normklima (20°C, 65 % relative Luftfeuchtigkeit) gelagert.

### (2) Durchgeführte Prüfungen

An den aus den zementgebundenen Gemischen hergestellten Probekörpern wurden die nachfolgend beschriebenen Prüfungen durchgeführt:
- Bestimmung der Druckfestigkeit nach 7 und 28 Tagen gemäß den Vorgaben der EN 13286-41
- Bestimmung der Spaltzugfestigkeit nach 7 und 28 Tagen gemäß den Vorgaben der EN 13286-42
(Anmerkung: Unmittelbar vor den Prüfungen wurden die Probekörper über vier Stunden unter Wasser gelagert).

### Weiterführende Prüfungen

Nach dem Vorliegen der Ergebnisse der Prüfungen, wie diese im Rahmen der Eignungsprüfung für mit Zement stabilisierte Tragschichten erfolgen, wurde entschieden, dass die im Folgenden beschriebenen weiterführenden Prüfungen an folgenden Gemischen durchgeführt werden:
Gemisch Nr. 1 (Beton M1: ausschließlich mit Zement gebunden)
Gemische Nr. 3 und Nr. 4 (Betone M3 und M4): hergestellt mit unterschiedlichem Gehalt von Zusatzstoff Z

### (i) Bestimmung des Sehwindverhaltens der mit und ohne Zusatz von Zusatzstoff Z hergestellten, mit Zement gebundenen Betonen

Die vergleichende Prüfung erfolgte in Anlehnung an die ÖNORM B 3329 "Vergussmörtel - Anforderungen und Prüfmethoden", Punkt 7.3 "Quellen und Schwinden", in sogenannten Schwind/Quellrinnen. Hierbei wurde an dem frisch hergestellten, mit Zement gebundenen Gemisch (Beton) kontinuierlich mittels eines Wegaufnehmers die Längenänderung beim Normklima (20°C, 65 % relative Luftfeuchtigkeit) während der Erhärtung über den Zeitraum von bis zu 14 Tagen registriert. Anhand dieser Prüfanordnung wurde ermittelt, ob die unter Zusatz von Zusatzstoff Z hergestellten Gemische eine geringere Sehwindneigung aufweisen, als das ausschließlich unter Zusatz von Zement hergestellte Gemisch.

### (ii) Erfassung der Ermüdungsfestigkeit der mit Zement stabilisierten Schichten

Die Beständigkeit gegen Ermüdung wurde mittels der 4 Punkt - Biegeprüfung an prismatischen Probekörpern gemäß der EN 12697-24, Anhang D, geprüft. Von den drei ausgewählten Betonen wurden entsprechend große Mischungen hergestellt und Schichten der mit Zement gebundenen Gesteinskörnung mit den Abmessungen 500 mm x 300 mm x 160 mm mittels eines Walzsegmentverdichters (Gleitplattenverfahren) gemäß der EN 12697-33 hergestellt. Die mit Zement gebundenen Gesteinskörnungen wurden auf den Verdichtungsgrad von 98 %, bezogen auf die Proctordichte, verdichtet.

Die aus den zementgebundenen Gemischen hergestellten Platten wurden über 30 Tage beim Normklima (20 °C, 65 % relative Luftfeuchtigkeit) gelagert. Anschließend wurden je Gemisch 18 Probekörper mit den Abmessungen 500 mm x 60 mm x 60 mm ausgeschnitten. Die Platten aus den mit Zement gebundenen Gesteinskörnungen wurden im Zeitrahmen so hergestellt, dass die drei Mischungen (Rezepturen) jeweils im Alter von 40 - 50 Tagen hinsichtlich der Ermüdungsfestigkeit geprüft wurden. Die Prüfung der Beständigkeit gegen Ermüdung erfolgte in einer weggesteuerten servohydraulischen Prüfmaschine bei der Frequenz von 30 Hz. Zur Erfassung der Ermüdungsfestigkeit der hydraulisch gebundenen Gemische wurden drei unterschiedliche Dehnungsamplituden gewählt. Die Bestimmung des Steifigkeitsmoduls erfolgte bei der Frequenz von 8 Hz.

### Ergebnisse der Prüfungen

### 1 Ergebnis der Prüfungen, die zur Ausarbeitung einer Eignungsprüfung für mit Zement stabilisierte Tragschichten gemäß der RVS 08.17.01 relevant sind

### Korngrößenverteilung der Gesteinskörnung

Die Korngrößenverteilung der Gesteinskörnung, aus der mit Zement gebundenen Gemische hergestellt wurden, war wie folgt:

**Tabelle 3**

| Korngröße [mm] | Kornanteil [M .-%] |
|---|---|
| > 11,2 | 14 |
| < 4,0 | 41 |
| < 0,063 | 7,6 |

### Quell- und Sehwindverhalten der mit Zement verfestigten Gesteinskörnungen

Die vergleichenden Prüfungen erbrachten die folgenden Ergebnisse:

### Mischung Nr. 1:

Mit Zement stabilisiertes Mischgut ohne Zusatzstoff Z

Die Mischung M1 zeigte ein Quellen im Mittel von bis zu 66 µm/m, d.h. das Quellverhalten der STZ überlagerte zu Beginn der Erhärtung das Schwindverhalten des Zementsteins. Das Schwindverhalten (nach Abschluss des Quellverhaltens) in einem Zeitraum von 11 Tagen betrug linear idealisiert 1,7 µm/Tag.

### Mischung Nr. 3:

Mit Zement stabilisiertes Mischgut mit Zusatz von 3 Gew.-% Zusatzstoff Z, bezogen auf die Zementmenge

Die Mischung M3 zeigte ein Quellen im Mittel von bis zu 50 µm/m, d.h. das Quellverhalten der STZ überlagerte zu Beginn der Erhärtung das Schwindverhalten des Zementsteins. Das Schwindverhalten (nach Abschluss des Quellverhaltens) in einem Zeitraum von 13 Tagen betrug linear idealisiert 1,2 µm/Tag.

### Beständigkeit gegen Ermüdung

### Vierpunkt-Biegeprüfung gemäß ÖNORM EN 12697-24:2012

Die Mischung M4 zeigte ein Quellen im Mittel von bis zu 50 µm/m, d.h. das Quellverhalten der STZ überlagerte zu Beginn der Erhärtung das Sehwindverhalten des Zementsteins. Das Sehwindverhalten (nach Abschluss des Quellverhaltens) im Zeitraum von 14 Tagen betrug linear idealisiert 0,7 µm/Tag.

Die Schwankungsbreite des Messbereichs von ca. 5 µm wurde durch die geringfügigen Temperaturschwankungen bzw. Luftfeuchtigkeitsschwankungen in der Klimakammer verursacht. Die Lagerung der Probekörper erfolgte bei 20 °C ± 1 °C und einer relativen Luftfeuchtigkeit von 65 % ± 10 %.

### Ermüdungsfestigkeit der mit Zement verfestigten Schichten

Die Ergebnisse der vergleichenden Überprüfung der Ermüdungsfestigkeit der mit Zement stabilisierten Schichten sind in Tabelle 4 aufgeführt.

**Tabelle 4**

| **Kennwert** | **Einheit** | **M1 4 Gew.-% Zement** | **M3 4 Gew.-% Zement 3 Gew.-% Zusatzstoff Z** | **M4 4 Gew.-% Zement 5 Gew.-% Zusatzstoff Z** |
|---|---|---|---|---|
| Dauerhaftigkeit der Schicht gegen Ermüdung bei 10⁶ Zyklen bei der Frequenz von 30 Hz | µm/m | 87 | 107 | 97 |
| Steifigkeit der Schicht bei der Frequenz von 8 Hz zum Alter von 40 bis 50 Tagen | MPa | 9.821 | 8.205 | 10.731 |

Die obigen vergleichenden materialtechnischen Prüfungen erlauben die folgenden Schlussfolgerungen.

### Die Festigkeitswerte der mit Zement gebundenen Gemische:

Die unter Zusatz von Zusatzstoff Z hergestellten Gemische zeigen bei gleichem Zementgehalt eine langsamer verlaufende Festigkeitsentwicklung als das ausschließlich auf Basis von Zement hergestellte Gemisch. Die langsamer verlaufende Festigkeitsentwicklung nimmt mit steigendem Anteil des Zusatzes Zusatzstoff Z zu.

### Sehwindverhalten der mit Zement gebundenen Gemische:

Das Schwindmaß der unter Zusatz von Zusatzstoff Z hergestellten zementgebundenen Gemische liegt deutlich niedriger als bei einem Gemisch, das ausschließlich auf Basis von Zement hergestellt wurde. Beim Zusatz von 5 Gew.-% Zusatzstoff Z, bezogen auf das Zementgewicht, liegt das Schwindmaß um mehr als 50 % niedriger als bei dem ausschließlich unter Verwendung von Zement hergestellten Beton (Magerbeton). Das deutlich geringere Schwindmaß reduziert das Risiko von Rissausbildungen in den mit Zement stabilisierten Schichten. Es ist bekannt, dass durch das Schwinden bedingt in den mit Zement stabilisierten Schichten ohne zusätzliche Maßnahmen wie Schneiden, Kerben oder Entspannungswalzen im Regelfall Querrisse, seltener Längsrisse auftreten. Diese Risse reflektieren in die darüber angeordneten gebundenen Schichten wie Asphalt- bzw. Betonkonstruktionen. Die mögliche Verhinderung dieser für die mit Zement stabilisierten Schichten typischen Schadensbilder durch die Verringerung der Sehwindneigung ist ein großer technischer Vorteil der vorliegenden Erfindung.

### Ermüdungsfestigkeit der mit Zement gebundenen Gemische:

Die unter Zusatz von Zusatzstoff Z hergestellten, mit Zement stabilisierten Schichten weisen eine günstigere Ermüdungsfestigkeit auf als die ausschließlich mit Zement gebundene Schicht.

Bei der Mischung mit 5 Gew.-% Zusatzstoff Z wurde des Weiteren neben der verbesserten Ermüdungsfestigkeit auch ein hoher Steifigkeitsmodul nachgewiesen. Dies bedeutet, dass für diese Schicht eine längere Lebensdauer zu erwarten ist, als für die ausschließlich mit Zement gebundenen Schichten.

Die hierin gezeigten Untersuchungen haben ergeben, dass bei der Anwendung des erfindungsgemäßen Zusatzstoffes für die Herstellung der mit Zement gebundenen Schichten eine langsamer verlaufende Erhärtung der Schichten, verbunden mit deutlich geringerer Sehwindspannung, resultiert. Dieser Umstand reduziert das Risiko von Rissausbildungen in den mit Zement stabilisierten Schichten. Der erfindungsgemäße Zusatzstoff reduziert die Schwindungsneigung der mit hydraulischen Bindemitteln gebundenen Schichten. Des Weiteren wurde hinsichtlich der Ermüdungsfestigkeit der Schichten festgestellt, dass die Dauerhaftigkeit der mit dem erfindungsgemäßen Zusatzstoff modifizierten Schichten gegen Ermüdung besser ist als dies bei den ausschließlich mit Zement gebundenen Schichten der Fall ist. Dieser Umstand wirkt sich positiv auf die Verlängerung der Lebensdauer der Schichten bei gleicher Verkehrsbelastung aus.

## Patentansprüche

1. Zusatzstoff für Beton, **dadurch gekennzeichnet, dass** er
(a) ein Butadien-Styrol-Copolymer;
(b) ein Styrol-Acrylester-Copolymer; und
(c) Wasser enthält.

2. Zusatzstoff nach Anspruch 1, **dadurch gekennzeichnet, dass** der Beton ein Magerbeton mit einem Zementanteil von weniger als 12 Gew.-%, bezogen auf den Beton, ist.

3. Zusatzstoff nach Anspruch 1 oder 2, **dadurch gekennzeichnet, dass** es ein Zusatzstoff für Beton zur Bodenverfestigung ist.

4. Zusatzstoff nach einem der Ansprüche 1 bis 3, **dadurch gekennzeichnet, dass** das Styrol-Acrylester-Copolymer ein Styrol-Butylacrylat-Copolymer ist.

5. Zusatzstoff nach einem der Ansprüche 1 bis 4, **dadurch gekennzeichnet, dass** er
5 bis 95 Gew.-% Butadien-Styrol-Copolymer (a); und
5 bis 95 Gew.-% Styrol-Butylacrylat-Copolymer als Styrol-Acrylester-Copolymer (b), bezogen auf die Summe von (a) und (b), enthält.

6. Zusatzstoff nach Anspruch 5, **dadurch gekennzeichnet, dass** er
20 bis 80 Gew.-% Butadien-Styrol-Copolymer (a); und
20 bis 80 Gew.-% Styrol-Butylacrylat-Copolymer (b), bezogen auf die Summe von (a) und (b), enthält.

7. Zusatzstoff nach einem der Ansprüche 1 bis 6, **dadurch gekennzeichnet, dass** er ein Gehalt an Wasser im Bereich von 30 bis 70 Gew.-%, vorzugsweise im Bereich von 40 bis 60 Gew.-%, jeweils bezogen auf das Gesamtgewicht des Zusatzstoffs, hat.

8. Zusatzstoff nach Anspruch 7, **dadurch gekennzeichnet, dass** der pH im Bereich von 9 bis 12,5, vorzugsweise im Bereich von 9,5 bis 12, und mehr bevorzugt im Bereich von 10 bis 11,5 liegt.

9. Zusatzstoff nach einem der Ansprüche 1 bis 8, **dadurch gekennzeichnet, dass** er zusätzlich als Komponente (d) ein Natriumsilikat enthält, vorzugsweise mit einem Gewichtsverhältnis SiO₂ zu Na₂O im Bereich von 1,5 zu 5.

10. Zusatzstoff nach einem der Ansprüche 1 bis 9, **dadurch gekennzeichnet, dass** er zusätzlich als Komponente (e) ein pyrogenes oder kolloidales Siliziumdioxid enthält.

11. Verfahren zur Herstellung eines Magerbetons, enthaltend einen Schritt der Mischung eines Zements mit einem Zusatzstoff nach einem der Ansprüche 1 bis 10 und mit einer Gesteinskörnung.

12. Verfahren nach Anspruch 11, **dadurch gekennzeichnet, dass** es ein Verfahren zur Herstellung eines Straßen- oder Wegaufbaus ist, enthaltend einen Schritt der Herstellung einer hydraulisch gebundenen Schicht, in dem ein Bodenmaterial mit dem Zement und dem Zusatzstoff nach einem der Ansprüche 1 bis 10 vermischt wird und eine daraus erhaltene Untergrundschicht kompaktiert wird.

13. Verfahren nach Anspruch 12, **dadurch gekennzeichnet, dass** die hydraulisch gebundene Schicht Zement in einer Menge von 0,3 bis 10 Gew.-%, vorzugsweise in einer Menge von 2 bis 5 Gew.-%, bezogen auf das Gewicht der Schicht enthält.

14. Verfahren nach einem der Ansprüche 12 oder 13, **dadurch gekennzeichnet, dass** die hydraulisch gebundene Schicht den Zusatzstoff in einer Menge von 0,05 bis 0,5 Gew.-%, bezogen auf das Gewicht der Schicht, enthält.

15. Verfahren nach einem der Ansprüche 12 bis 14, **dadurch gekennzeichnet, dass** auf der hydraulisch gebundenen Schicht eine Deckschicht aufgebracht wird, vorzugsweise eine Bitumen oder Beton enthaltende Deckschicht.

## Geänderte Patentansprüche

### Geänderte Patentansprüche gemäss Regel 137(2) EPÜ.

1. Zusatzstoff für Beton, **dadurch gekennzeichnet, dass** er
(a) ein Butadien-Styrol-Copolymer;
(b) ein Styrol-Acrylester-Copolymer;
(c) Wasser,
(d) ein Alkalisilikat; und
(e) ein pyrogenes oder kolloidales Siliziumdioxid
enthält.

2. Zusatzstoff nach Anspruch 1, **dadurch gekennzeichnet, dass** das Styrol-Acrylester-Copolymer ein Styrol-Butylacrylat-Copolymer ist.

3. Zusatzstoff nach einem der Ansprüche 1 bis 2, **dadurch gekennzeichnet, dass** er
5 bis 95 Gew.-% Butadien-Styrol-Copolymer (a); und
5 bis 95 Gew.-% Styrol-Butylacrylat-Copolymer als Styrol-Acrylester-Copolymer (b), bezogen auf die Summe von (a) und (b), enthält.

4. Zusatzstoff nach Anspruch 3, **dadurch gekennzeichnet, dass** er
20 bis 80 Gew.-% Butadien-Styrol-Copolymer (a); und
20 bis 80 Gew.-% Styrol-Butylacrylat-Copolymer (b), bezogen auf die Summe von (a) und (b), enthält.

5. Zusatzstoff nach einem der Ansprüche 1 bis 4, **dadurch gekennzeichnet, dass** er einen Gehalt an Wasser im Bereich von 30 bis 70 Gew.-%, vorzugsweise im Bereich von 40 bis 60 Gew.-%, jeweils bezogen auf das Gesamtgewicht des Zusatzstoffs, hat.

6. Zusatzstoff nach Anspruch 5, **dadurch gekennzeichnet, dass** der pH im Bereich von 9 bis 12,5, vorzugsweise im Bereich von 9,5 bis 12, und mehr bevorzugt im Bereich von 10 bis 11,5 liegt.

7. Zusatzstoff nach einem der Ansprüche 1 bis 6, **dadurch gekennzeichnet, dass** er als Komponente (d) ein Natriumsilikat enthält, vorzugsweise mit einem Gewichtsverhältnis SiO₂ zu Na₂O im Bereich von 1,5 zu 5.

8. Verfahren zur Herstellung eines Leichtbetons mit einem Zementanteil von weniger als 12 Gew.-%, bezogen auf den Beton, enthaltend einen Schritt der Mischung eines Zements mit einem Zusatzstoff nach einem der Ansprüche 1 bis 7 und mit einer Gesteinskörnung.

9. Verfahren zur Herstellung eines Straßen- oder Wegaufbaus, enthaltend einen Schritt der Mischung eines Zements mit einem Zusatzstoff nach einem der Ansprüche 1 bis 7 und mit einer Gesteinskörnung und enthaltend einen Schritt der Herstellung einer hydraulisch gebundenen Schicht, in dem ein Bodenmaterial mit dem Zement und dem Zusatzstoff nach einem der Ansprüche 1 bis 7 vermischt wird und eine daraus erhaltene Untergrundschicht kompaktiert wird.

10. Verfahren nach Anspruch 9, **dadurch gekennzeichnet, dass** die hydraulisch gebundene Schicht Zement in einer Menge von 0,3 bis 10 Gew.-%, vorzugsweise in einer Menge von 2 bis 5 Gew.-%, bezogen auf das Gewicht der Schicht, enthält.

11. Verfahren nach einem der Ansprüche 9 oder 10, **dadurch gekennzeichnet, dass** die hydraulisch gebundene Schicht den Zusatzstoff in einer Menge von 0,05 bis 0,5 Gew.- %, bezogen auf das Gewicht der Schicht, enthält.

12. Verfahren nach einem der Ansprüche 10 bis 11, **dadurch gekennzeichnet, dass** auf der hydraulisch gebundenen Schicht eine Deckschicht aufgebracht wird, vorzugsweise eine Bitumen oder Beton enthaltende Deckschicht.

13. Verwendung des Zusatzstoffes nach einem der Patentansprüche 1 bis 7 für Beton.

14. Verwendung nach Anspruch 13, **dadurch gekennzeichnet, dass** der Beton ein Leichtbeton mit einem Zementanteil von weniger als 12 Gew.-%, bezogen auf den Beton, ist.

15. Verwendung nach Anspruch 13 oder 14, **dadurch gekennzeichnet, dass** es ein Zusatzstoff für Beton zur Bodenverfestigung ist.
